(19) Europäisches Patentamt
European Patent Office
Office européen des brevets

(11) **EP 1 180 854 A1**

(12) **EUROPEAN PATENT APPLICATION**

(43) Date of publication:
**20.02.2002 Bulletin 2002/08**

(51) Int Cl.$^7$: **H04B 7/005**

(21) Application number: **01301721.5**

(22) Date of filing: **26.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **18.08.2000 US 642258**

(71) Applicant: **LUCENT TECHNOLOGIES INC.**
**Murray Hill, New Jersey 07974-0636 (US)**

(72) Inventors:
• **Chen, Tai-Ann**
**Parsippany, New Jersey 07054 (US)**

• **Meyers, Martin Howard**
**Montclair, New Jersey 07043 (US)**
• **Qiu, Robert Caiming**
**Morris Plains, New Jersey 07950 (US)**

(74) Representative:
**Buckley, Christopher Simon Thirsk et al**
**Lucent Technologies (UK) Ltd, 5 Mornington Road**
**Woodford Green, Essex IG8 0TU (GB)**

(54) **Power control with smart step size based on channel parameter measurements**

(57)    Disclosed is a method for determining optimum transmit step sizes as functions of one or more radio environment parameters in real time using a channel condition estimation scheme, wherein channel condition estimation corresponds to measuring or estimating channel parameters including, but not limited to, mobile-station velocity, Doppler spread, K-factor, number of multi-paths, and/or strengths of each multi-path. A channel condition is estimated and then used to determine optimum transmit step sizes, wherein the optimum transmit step sizes may be based on a desired quality of service parameter. Upon determining the optimum transmit step size, the transmit power levels are adjusted up or down an amount approximately equal to the optimum transmit step sizes.

*FIG. 5*

500

ESTIMATE CHANNEL CONDITION — 510

DETERMINE OPTIMUM TRANSMIT STEP SIZE AND TARGET CONTROL THRESHOLD BASED ESTIMATED CHANNEL CONDITION — 520

MEASURE TARGET CONTROL — 530

IS MEASURED TARGET CONTROL GREATER THAN TARGET CONTROL THRESHOLD ? — 540

TRANSMIT POWER CONTROL MESSAGE — 550

EP 1 180 854 A1

**Description**

Related Application

Related subject matter is disclosed in the following application filed concurrently herewith and assigned to the same Assignee hereof: U.S. patent application entitled "A Channel Assisted Power Control Technique", Serial No. _____, inventors Tai-Ann Chen, Kaiping Li, Martin Howard Meyers, Robert Qiu and Carl Francis Weaver. Related subject matter is disclosed in the following filed application and assigned to the same Assignee hereof and U.S. application entitled "Method and System for Doppler Frequency Estimation", Serial No._____, inventor Robert Qiu.

Field of the Invention

The present invention relates generally to wireless communications systems and, in particular, to power control techniques for wireless communications systems.

Background of the Related Art

Wireless communications systems incorporate power control techniques to improve system performance and increase system capacity. The goal of power control is to obtain a desired quality of service (QOS) for a communication link at a minimum transmit power level, wherein quality of service may be measured in terms of frame error rate (FER), bit error rate (BER) or symbol error rate (SER). Power control is achieved by tracking fades in the communication link and compensating for such fades through manipulation of transmit power at base stations and/or mobile-stations in order to maintain the desired quality of service.

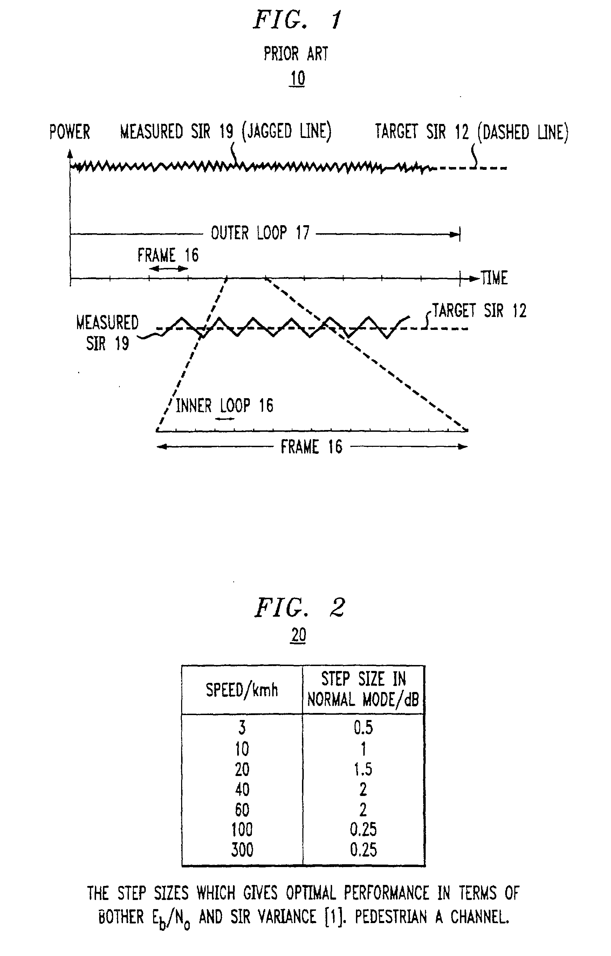

Power control techniques for wireless communications systems based on code division multiple access (CDMA) include outer and inner power control loops. FIG. 1 depicts an illustration 10 of outer and inner power control loops in accordance with the prior art. Outer power control loops involve, for each communication link, setting a target signal-to-interference ratio (SIR) 12 (or other target control threshold) that will achieve a desired FER (or other QOS parameter), which is typically one percent. For purposes of this application, the term signal-to-interference ratio or SIR should be construed to include signal-to-interference ratio, carrier-to-interference ratio, signal-to-noise ratio, carrier-to-noise ratio,

$$ E_b \Big/ N_o $$

or other similar measurements.

An initial target SIR is set based on the desired FER. Upon setting the initial target SIR, frame errors are measured over a time interval referred to herein as an outer loop period 14. Typically, outer loop period 14 is equivalent to ten frames 16, wherein a frame spans a duration of 20 ms. If the measured frame errors produce a measured (or moving average measured) FER greater than the desired FER, the target SIR 12 is increased an up SIR step size for the next outer loop period 14. If the measured frame errors produces a measured (or moving average measured) FER less than or equal to the desired FER, the target SIR 12 is decreased a down SIR step size for the next outer loop period 14. Thus, the measured FER is used to adjust the target SIR 12. Note that the down SIR step size is usually much smaller than the up SIR step size. Typically, the ratio between the down SIR step size and the up SIR step size corresponds to the desired FER. For example, for a desired FER of 1%, the down and up SIR step sizes would be .01 dB and 1 dB, respectively.

Inner power control loops involve, for each communication link, manipulating transmit power at the base station and/or mobile-station according to the target SIR set by the outer power control loop. Specifically, the inner power control loop measures SIR 19 (or its moving average) over a time interval referred to herein as an inner loop period 18. Typically, the inner loop period is equivalent to a sixteenth of a frame, e.g., 1.25 ms. For inner loop power control, the measured (or moving average measured) SIR is compared to the target SIR. If the measured (or moving average measured) SIR 19 is greater than the target SIR 12, the receiving entity (e.g., base station) indicates to the transmitting entity (e.g., mobile-station) to increase its transmit power an up transmit step size (thereby increasing actual and measured SIR). By contrast, if the measured (or moving average measured) SIR 19 is less than the target SIR 12, the receiving entity indicates to the transmitting entity to decrease its transmit power a down transmit step size (thereby decreasing actual and measured SIR), wherein the up and down transmit steps may be identical or different sizes.

Preferably, the sizes of the up and down transmit steps are real-time optimum sizes which are functions of radio environment parameters - that is, the optimum up and down transmit step sizes are established in real-time according to radio environment parameters. However, determining the optimum up and down transmit steps as functions of radio environment parameters is a very complicated process that is difficult to achieve in real-time. Accordingly, prior art up and down transmit step sizes are fixed sizes, e.g., 5 dB. Fixed step sizes, however, may adversely affect system capacity for a variety of reasons including higher target SIRs being required to achieve a desired quality of service and greater differences (or standard deviations) between average measured SIR and individual measured SIR. Accordingly, there exists a need for determining optimum up and down transmit step sizes as functions of radio environment parameters in real-time.

Summary of the Invention

The present invention is a method for determining optimum transmit step sizes as functions of one or more radio environment parameters in real time using a channel condition estimation scheme, wherein channel condition estimation corresponds to measuring or estimating channel parameters including, but not limited to, mobile-station velocity, Doppler spread, K-factor, number of multi-paths, strengths of each multi-path, and mean, variance and/or correlation time of a measured target control, such as signal-to-noise ratio over a power control group time period. The present invention estimates a channel condition and uses the estimated channel condition to determine optimum transmit step sizes, wherein the optimum transmit step sizes may be based on a desired quality of service parameter. Upon determining the optimum transmit step size, the transmit power levels are adjusted up or down an amount approximately equal to the optimum transmit step sizes.

Brief Description of the Drawings

The features, aspects, and advantages of the present invention will become better understood with regard to the following description, appended claims, and accompanying drawings where:

FIG. 1 depicts an illustration of outer and inner power control loops in accordance with the prior art;
FIG. 2 depicts an example of an OTSS look-up table relating mobile-station velocity to optimum transmit step sizes for a desired QOS of 1% BER in accordance with the present invention;
FIG. 3 depicts an example of an OTSS look-up table relating mobile-station velocity and number of multi-paths to optimum transmit step sizes;
FIG. 4 depicts an example of a functional relationship table relating mobile-station velocity, transmit step sizes and target SIR;
FIG. 5 depicts a flowchart illustrating utilization of optimum transmit step sizes in accordance with one embodiment of the present invention; and
FIG. 6 depicts an example of a look-up table based on OTSS look-up table of FIG. 2 and functional relationship table of FIG. 4.

Detailed Description

The present invention determines optimum transmit step sizes as functions of one or more radio environment parameters in real time using a channel condition estimation scheme, wherein channel condition estimation corresponds to measuring or estimating channel parameters including, but not limited to, mobile-station velocity, Doppler spread, K-factor, number of multipaths, strengths of each multi-path, and mean, variance and correlation time of a measured target control, such as signal-to-noise ratio over a power control group or other time period. The manners in which channel conditions may be measured or estimated are well-known in the art. See Appendix A, which describes one manner of measuring Doppler shift. The present invention estimates a channel condition and uses the estimated channel condition to determine optimum transmit step sizes based on known functional relationships between channel conditions, target controls and step sizes, wherein target controls are physical parameters corresponding to quality of service (QOS) parameters, i.e., abstract parameters relating to merits of service. QOS parameters and target control thresholds include, but are not limited to, signal-to-interference ratio, signal level, frame error rate (FER), bit error rate (BER), block error rate (BLER) and symbol error rate (SER).

In one embodiment, the present invention determines optimum transmit step sizes for estimated channel conditions using a look-up table or database (hereinafter referred to as "OTSS look-up table") which had been established beforehand, wherein the OTSS look-up table relates one or more channel conditions to optimum transmit step sizes for a desired quality of service - that is, the present invention uses a priori knowledge of transmit step sizes and channel conditions to determine the optimum transmit step sizes in real-time.

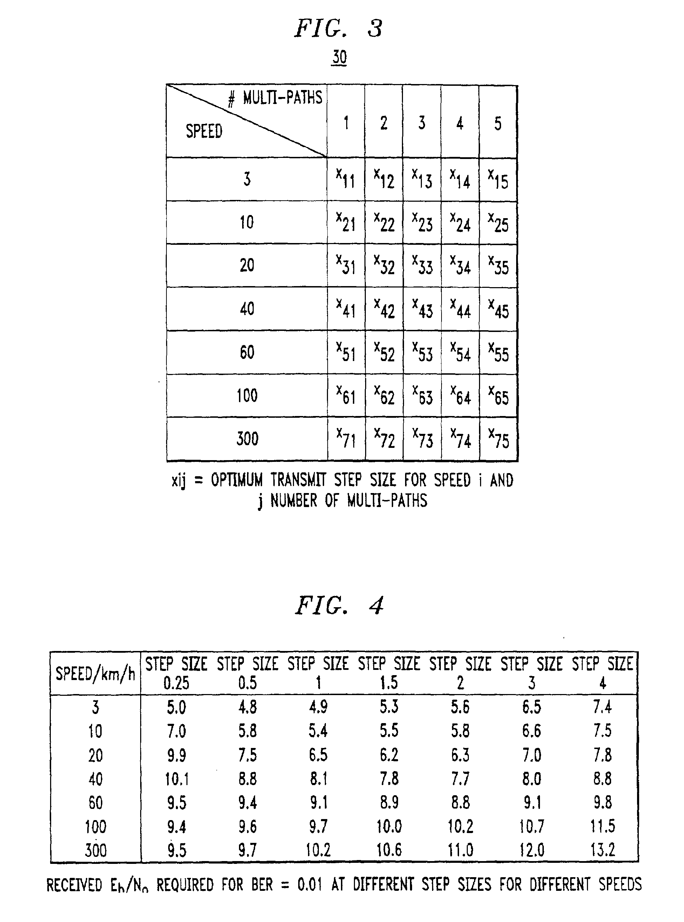

FIG. 2 depicts an example of an OTSS look-up table 20 relating mobile-station velocity to optimum transmit step sizes for a desired QOS of 1% BER in accordance with the present invention. It should be understood that channel conditions other than mobile-station velocity may also be used. Note that the optimum transmit step sizes in OTSS look-up table 20 are the optimum transmit step sizes for both increasing and decreasing transmit power. It should be understood that different optimum transmit step sizes may be used for increasing and decreasing transmit power for a given channel condition. Furthermore, it should be understood that OTSS look-up tables in accordance with the present invention may relate optimum transmit step sizes to two or more channel conditions. See FIG. 3, which depicts an example of an OTSS look-up table 30 relating two channel conditions, i.e., mobile-station velocity and number of multi-paths, to optimum transmit step sizes $x_{ij}$.

OTSS look-up tables may be derived in a variety of manners. One such manner for deriving OTSS look-up tables involves ( I ) deriving functional relationships between channel conditions, target controls and transmit step sizes, and (2) deriving optimum transmit step sizes based on the derived functional relationships. The functional relationships between channel conditions, target controls and transmit step sizes are complex relationships which can be derived using a variety of techniques before attempting to perform power control. One technique of deriving such functional relationships involves system modeling using a computer simulation based on theoretical relationships between channel conditions, target controls (or QOS) and transmit step sizes, as is well known in the art. Controlled laboratory tests and field tests can also be used to derive the functional relationships, or to enhance the results of the functional relationships derived through system modeling.

FIG. 4 depicts an example of a functional relationship table 40 relating mobile-station velocity, transmit step sizes and target SIR, wherein target SIR are expressed in terms of received

$$\frac{E_b}{N_o}$$

(at a receiving entity, such as a base station) required for a BER of 1%. To illustrate, for a mobile-station traveling at 10 kilometers per hour and a transmit step size (or change in transmit power level) of 0.25 dB, the target SIR required for an 1% BER would be 7.0 dB. Similarly, for a mobile-station traveling at 40 kilometers per hour and a transmit step size of 1.00 dB, the target SIR required for an 1% BER would be 8.1 dB.

OTSS look-up tables are derived from functional relationship tables by selecting transmit step sizes that achieves the desired quality of service at a minimum (or near minimum) target control threshold for each channel condition. This concept can be illustrated using OTSS look-up table 20 of FIG. 2, which was derived from functional relationship table 40 of FIG. 4. For example, for a mobile-station with a velocity of 3 kilometers per hour, the lowest target SIR for achieving the desired BER of 1% would be 4.8 dB. The corresponding transmit step size for the 4.8 dB target SIR would then be 0.5 dB. Thus, 0.5 dB is the optimum transmit step size for a desired QOS of 1% BER for mobile-stations traveling at 3 kilometers per hour. Optimum transmit step sizes for other mobile-station velocities, in this example, would be derived in the same manner.

Advantageously, utilization of optimum transmit step sizes to control transmit power levels increases system capacity without sacrificing quality of service in at least two manners. First, utilizing optimum transmit steps lowers the target SIRs being required to achieve the desired quality of service for communication links, thereby lowering overall interference and increasing system capacity. Second, utilizing optimum transmit step sizes reduces differences (or standard deviations) between average measured SIR and individual measured SIR to increase system capacity.

As shown in table 20, the optimum transmit step size generally increases and decreases as mobile-station velocity increases and decreases to compensate for rapid changes in SIR measured at the base station. Note that, however, when mobile-station velocity is large, e.g., 100 kilometers per hour or greater, fading in communication links is difficult to track. In such situations, the optimum transmit step size is small, e.g., 0.25 dB, for purposes of avoiding overshooting the target SIR when adjusting transmit power.

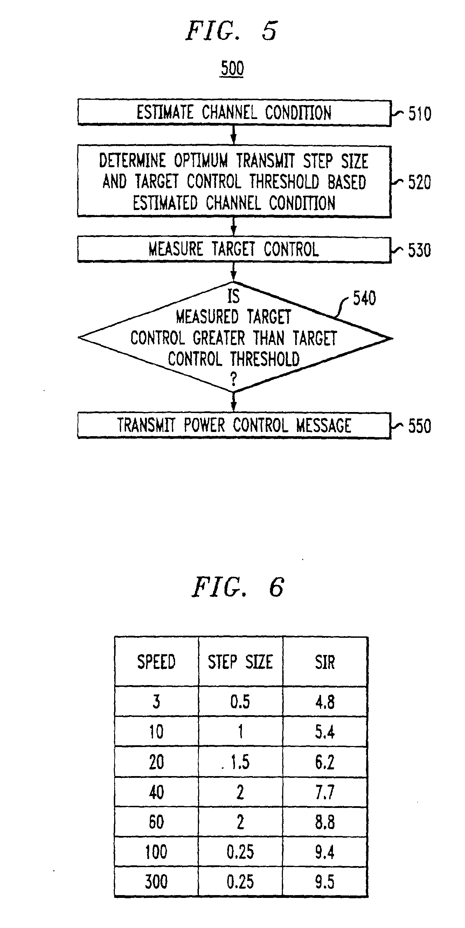

FIG. 5 depicts a flowchart 500 illustrating utilization of optimum transmit step sizes in accordance with one embodiment of the present invention. In step 510, a channel condition is estimated by a receiving entity, e.g., base station, for a communication link associated with a transmitting entity, e.g., mobile-station. In step 520, a target control threshold and an optimum transmit step size is determined for the estimated channel condition using a look-up table relating channel conditions to optimum transmit step sizes and target control thresholds. See FIG. 6, which depicts an example of such a look-up table 60 based on OTSS look-up table 20 and functional relationship table 40. Note that the initial target control threshold could be determined using some criteria other than channel condition. For example, the initial target control threshold is established using only known mathematical relationships between FER and SIR.

In step 530, the target control is measured by the receiving entity for the communication link. In step 540, the receiving entity determines whether the measured target control is greater than the target control threshold determined in step 520. If the measured target control is greater than the determined target control threshold, in step 550, the receiving entity transmits a power control message indicating to the transmitting entity to increase its transmit power level an optimum transmit step size. By contrast, if the measured target control is not greater than the determined target control threshold, in step 560, the receiving entity transmits a power control message indicating to the transmitting entity to decrease its transmit power level an optimum transmit step size.

The following example is provided herein to illustrate flowchart 500. In step 510, a base station estimates a mobile-station to be traveling at 40 kilometers per hour. In step 520, based on look-up table 60, the base station sets the target SIR threshold to 7.7 dB and the optimum transmit step size to 2.0 dB. In step 530, the base station measures the SIR for the communication link associated with the mobile-station. In steps 540 and 550, the base station transmits a power control message to the mobile-station indicating to the mobile-station whether to increase or decrease its transmit power level 2.0 dB.

Although the present invention has been described in considerable detail with reference to certain embodiments, other versions are possible. For example, the present invention is equally applicable to wireless communications systems employing multiple access techniques other than CDMA, such as time division multiple access. Therefore, the spirit and scope of the present invention should not be limited to the description of the embodiments contained herein.

# APPENDIX A

# METHOD AND SYSTEM FOR DOPPLER FREQUENCY ESTIMATION

## FIELD OF THE INVENTION

This invention is related to digital signal processing, particularly to the estimation of Doppler frequency shift in digital mobile radio communication systems.

## RELATED APPLICATION

This application is related to co-pending application S/N 09/255,088, filed February 22, 1999, entitled, "Method and System for Compensation of Channel Distortion Using LaGrange Polynomial Interpolation," and co-pending application S/N 09/395,140, filed September 14, 1999, entitled, "Method for the Adaptive Compensation of Channel Distortion Using Doppler Frequency Estimation," having the same inventor and assignee as the present application. Each of those related applications is incorporated herein by reference.

## BACKGROUND OF THE INVENTION

Digital mobile radio communication is plagued by distortion in the transmission channel. A significant cause of such distortion is the shift in frequency, *i.e.*, the Doppler shift, caused by the relative motion between a transmitter and receiver. As is known in

the art, the Doppler frequency shift may be determined when the relative velocities of the receiving and transmitting systems are known. However, while knowledge of Doppler shift is important to distortion-compensation arrangements (as well as for other purposes), in a typical mobile communication system neither the direction nor the velocity of the mobile unit is known. Hence, the relative velocity between the transmitter and the receiver, and correspondingly the Doppler frequency shift, are unknown quantities.

In digital communications systems, compensation for channel distortion is commonly based on information derived from the insertion of known symbols – *e.g.*, pilot symbols, at regular intervals in the data stream. When these pilot symbols are recovered at the receiver, any deviation from their known values is taken to be caused by the distortion in the channel. From these deviations, the channel response may be estimated. Various methods of compensating for variations in the channel are known in the art, typically involving a determination of a set of weight factors for an equalizing filter. In general, however, these methods have been found to be of limited use in a dynamically changing signal environment as in a mobile wireless communication system -- where the relative velocity between receiver and transmitter is continually varying. Where one method of compensation may provide acceptable performance under one range of velocity conditions, this same method may not achieve acceptable performance under a different set of such velocity conditions. A distortion compensation methodology was disclosed in the cross-referenced co-pending application, S/N 09/255,088, in which

compensation weight factors are determined as a function of the Doppler frequency shift between the transmitted and received signal. In this method, if the Doppler frequency can be accurately estimated, then good compensation for the channel distortion may be achieved. However, because the relative velocity between the transmitting and receiving systems is often unknown for wireless mobile systems, an independent means for determining the Doppler frequency shift is required.

## SUMMARY OF THE INVENTION

The present invention provides an efficient method of determining the Doppler frequency shift that occurs in the reception of a communication signal when the relative velocity between the transmitted and receiver is unknown. By estimating the channel characteristics and measuring the channel response to known transmitted data bits, a measure of the Doppler frequency is determined according to the method of the invention. In particular, a good estimate of the Doppler frequency shift is obtained based on a second order statistic of the fading process for the channel response to the known transmitted data bits. The Doppler frequency shift may then be applied to a process that determines compensation weighting factors to adjust the channel in response to a Doppler shift, as well as for other purposes to which Doppler shift information is needed.

## BRIEF DESCRIPTION OF THE FIGURES

The advantages, nature and various additional features of the invention will appear more fully upon consideration of the illustrative embodiments now to be described in detail in connection with the accompanying drawings. In the drawings:

Figure 1 is a block diagram of a typical DS-CDMA receiver;

Figure 2 depicts a channel estimation and compensation processor operative to carry out a distortion compensation methodology as disclosed in cross-referenced co-pending application S/N 09/255,088;

Figure 3 is a diagram of a data stream divided into blocks with pilot symbols inserted at the beginning of each block;

Figure 4 depicts a channel estimation and compensation processor operative to carry out a distortion compensation methodology as disclosed in cross-referenced co-pending application S/N 09/395,140; and

Figure 5 is a flowchart showing the Doppler frequency estimation method of the invention.

## DETAILED DESCRIPTION

The invention is directed to a method for determining a Doppler frequency shift that occurs when a non-zero relative velocity exists between a transmitting site and receiving site in a wireless communications system. Although the Doppler frequency shift parameter finds utility in a variety of applications, including handoff of a mobile

unit between serving base stations and estimation of distortion compensation parameters in wireless communications systems, the methodology of the invention will be described herein in the context of the distortion compensation application. It should, however, be understood that all feasible applications are contemplated as within the scope of utility for Doppler frequency shift parameters developed according to the methodology of the invention. In a similar vein, application of the methodology of the invention is described hereafter in terms of a preferred embodiment based on a DS-CDMA wireless system. It will, however, be apparent to those skilled in the art that the inventive methodology may be applied for a variety of digital wireless systems such as TDMA or W-CDMA.

Figure 1 is a block diagram of a typical DS-CDMA receiver system for carrying out the method of the invention. An antenna **100** receives a spread-spectrum radio frequency (RF) signal. A typical carrier frequency in a cellular wireless system is 900 Megahertz and in a Personal Communication System (PCS) is 1900 Megahertz. RF receiver/demodulator **102** converts down from the carrier frequency. The result is an analog baseband signal, modulated by an encoded data stream, typically at 32 kilobits per second (kbps), and re-modulated by a spreading signal, typically at 4.096 megachips per second (Mcps). ("Chip" is the standard term for one cycle time of a spreading signal.) Data modulation may be based on any known methodology, but for purposes of the illustrative embodiment of the invention is taken to be quadrature phase shift keying (QPSK), which represents a data stream as a sequence of four-state symbols. A matched filter **104** removes the spreading signal by correlation with the phase of the spreading

signal. The remaining analog baseband signal is processed by a channel estimation and compensation processor **106** to produce an estimate of the encoded data.

Because the RF signal received at antenna **100** will generally include the superposition of multiple images of the source transmission -- representing different paths of propagation with different delays -- multiple instances of the filter **104** and compensation processor **106** may be used to extract an estimate of the encoded data stream from each of several of the strongest paths of propagation. A RAKE combiner **108** linearly combines these estimates to produce a higher confidence combined estimate of the original encoded data. Finally, a decoder **110** extracts the original data transmission.

The signal at the input of a channel estimation and compensation processor **106** is a modulated baseband signal distorted by propagation though the channel caused by multi-path reflection, random noise and, in cases of mobile sites, Doppler shifting of the carrier frequency.

Recognizing that a time sequence of two-dimensional signals like those of a QPSK modulation may be represented as a complex function of time, the signal at the input of a channel estimation and compensation processor **106** can be expressed algebraically as:

$$u(t) = c(t)z(t) + n(t) \qquad [1]$$

where $c(t)$ is the complex, time-varying channel gain;

$z(t)$ is the originally transmitted QPSK-modulated baseband signal; and

$n(t)$ is random noise.

If one can compute a good estimate of $c(t)$ (denoted hereafter as $\hat{c}(t)$) and $n(t)$ is negligibly small or reduced to insignificance by averaging, then a good estimate of $z(t)$ is:

$$\hat{z}(t) = \frac{u(t)}{\hat{c}(t)} \qquad\qquad [2]$$

Equation 2 can be rearranged to solve for $\hat{c}(t)$ and accordingly the approximate value of the channel distortion at any instant may be calculated from the values of the received signal and the original signal at that instant. If known pilot symbols with values $p$ are inserted in the original signal at specific points in time, then the original signal is known at those points and the value of the channel distortion at those points may be calculated based on the value of the received signal at those points and the original pilot signal values. The "channel estimation" may then be derived as an interpolation of these sample values of the channel function at the pilot signal points.

None of the various methods heretofore known in the art for such insertion and recovery of known symbols provides a perfect solution for the distortion compensation problem. For example, one such estimation method uses only a few symbols at a time which makes this method vulnerable to noise. Another exemplary method uses an experimental method to determine a fixed set of estimation formulae. These fixed

estimation formulae do not adjust to the changing conditions that exist during operation in a real channel.

An improved methodology for determining channel gain based on inserted pilot symbols was disclosed by the inventor in the cross-referenced co-pending application, S/N 09/255,088. The key features of that improved methodology can be understood in conjunction with the channel estimation and compensation processor depicted in Figure 2. In the figure, an input baseband signal $u(t)$ **500** is processed by a symbol synchronization module **408** and a block synchronization module **406**. Outputs of the symbol and block timing modules are processed to produce a pilot symbol sample clock **504** that controls an analog-to-digital sample circuit **402** (depicted with a switch-like symbol) to cause digital values of pilot symbol signals to be sent to the complex multiplier **511**. The output of the complex multiplier **511** represents an estimate of the channel gain at the time of a particular channel symbol. This estimate is sent to the delay line **512**.

The symbol synchronization module **408** also controls an analog-to-digital sample circuit **410** (depicted with a switch-like symbol) that operates to cause digital values of the input baseband signal $u(t)$ **500** at each pilot symbol time to be stored in a delay line **526**.

Consider briefly Figure 3, which shows a data stream **302** divided into ordered, consecutive blocks of M symbols each. The period of transmission of each block is $T_B$.

At the beginning of each block, one or more known pilot symbols are inserted in the data stream **302**.

Now, considering Figures 2 and 3 together, application of the method of the cross-referenced application for estimation of channel gain for the symbols in an arbitrarily chosen block 0 in the data stream 302 of Figure 3 will be described. With reference to the time frame **300** in Figure 3, a symbol sample time

$$t_{k,m} = NT_B + \left(\frac{m}{N}\right)T_B \qquad [3]$$

is the sample time of the $m$th symbol in the $k$th block. Pilot symbols are sampled at $t_{k,m}$, where $k = -2, -1, 0, 1, 2, 3$ and $m = 0, 1, 2, 3$ -- that is, there are four pilot symbols at the beginning of each block, and the symbols from blocks $-2, -1, 0, 1, 2,$ and $3$ are used for channel estimation.. For each input pilot symbol sample $u(t_{k,m})$, the complex multiplier **511** computes

$$\hat{c}(t_{k,m}) = u(t_{k,m})/p_{k,m} = c(t_{k,m}) + n(t_{k,m})/p_{k,m} \qquad [4]$$

where $k = -2, -1, 0, 1, 2, 3$, $m = 0, 1, 2, 3$, and $p_{k,m}$ is the known value of a pilot symbol at position $m$ in block $k$. These channel gain estimates are stored in the delay line **512**..

Complex averaging modules **534** are used to average the four channel gain estimates associated with the four consecutive pilot symbols at the start of each block that are stored in the delay line **512**. This averaging operates to minimize the error associated

with the noise term of Equation 4. It should be understood, as well, that the use of more than four symbols per block would effect an even better cancellation of the noise error.

Complex multipliers **614**, **615**, **616**, **617**, **618**, and **619** are used to multiply the outputs of averaging modules **534** by appropriate weighting coefficients $\alpha_{-2}(m)$, $\alpha_{-1}(m)$, $\alpha_0(m)$, $\alpha_1(m)$, $\alpha_2(m)$, and $\alpha_3(m)$, and the multiplier results are summed in complex adder **520**. The resulting sum **622** (at the output of adder **520**), representing channel gain estimates, is therefore represented algebraically as:

$$\hat{c}(t_{0,m}) = \hat{c}(t_{0,0} + mT_s) = \hat{c}(t_{0,0} + \frac{m}{N}T_B) = \sum_k \frac{\alpha_k(m)}{P} \sum_{m=0}^{P-1} \hat{c}(t_{k,m}) \qquad [5]$$

where $-0.5(r-2) \le k \le 0.5\, r$ for even $r$, and $-0.5(r-1) \le k \le 0.5\,(r-1)$ for odd $r$.

The estimation weighting coefficients, $\alpha$, are determined as follows (with $q = \dfrac{m}{N}$).

For even $r$:

$$\alpha_k(m) = \frac{(-1)^{0.5r+k}}{(0.5r-1+k)! \quad (0.5r-k)!(q-k)} \prod_{a=1}^{r} (q + 0.5r - a) \qquad [6]$$

For odd $r$:

$$\alpha_k(m) = \frac{(-1)^{0.5(r-1)+k}}{(0.5r-0.5+k)! \quad [0.5(r-1)-k]!(q-k)} \prod_{a=0}^{r-1} [q + 0.5(r-1) - a] \qquad [7]$$

With reference again to the channel estimation and compensation processor of Figure 2, the inverse of resulting sum **622** is then computed by complex multiplicative

inverter **424**. A baseband symbol sample **528** is generated by delay line **526**, where the delay is established to synchronize that baseband symbol sample with the computation of the estimated channel gain at the same sample time. Complex multiplier **430** then multiplies the output of inverter **424** with symbol sample **528** to generate an estimate of an original data symbol **632** in accordance with Equation 2.

While the heretofore describe distortion compensation methodology clearly provides an improvement over prior-art methods, simulation studies have shown that different rates of motion between a mobile station and a fixed station impact the efficacy of the methodology. Accordingly, a distortion-compensation methodology that provides an efficacious result over all rates of motion for the mobile unit was described by the inventor in the cross-referenced co-pending application, S/N 09/255,088, in which compensation weight factors are determined as a function of the Doppler frequency shift between the transmitted and the received signal. That methodology determines weight factors that minimize the Mean Square Error between the actual signal response and the estimated signal response by using a Doppler frequency that is related to the mobility of the mobile station as:

$$f_D = \frac{\mu f_c}{c} \tag{8}$$

where $f_D$ is the Doppler frequency;

$\mu$ is the velocity of the mobile station;

$f_C$ is the frequency of the carrier; and'

$c$ is the speed of light.

The estimation of the channel distortion may be generally expressed as:

$$\hat{c}(t) = \alpha_1 \hat{h}(t_1) + \alpha_2 \hat{h}(t_2) + \alpha_3 \hat{h}(t_3) + \dots + \alpha_n \hat{h}(t_n) \qquad [9]$$

where

$\hat{c}(t)$ is the estimated channel response at sample time $t$;

$\alpha_i$ is the weighting factor coefficient for the $i$-$th$ sample; and

$\hat{h}(t)$ is the measured channel response for the $i$-$th$ sample

and can be expressed as:

$$\hat{h}(t_i) = c(t_i) + n(t_i) \qquad [10]$$

The channel distortion estimation of Equation 9 can be written in the general

form:

$$\hat{c}(t_i) = \sum_{i=1}^{N} \alpha_i \hat{h}(t_i) \qquad [11]$$

In this form, it can be seen that the estimated channel response at sample time $t$ may be

represented as the output of a Finite Impulse Response (FIR) filter with coefficients $\alpha_i$.

According to the invention, the estimation and compensation processor estimates the distortion and determines weight factor coefficients, $\alpha_i$, needed to minimize the mean square error (MSE) between the actual signal response and the estimated signal response.

As is well known, the MSE may be defined as the Expected value of the error between the actual signal and estimated signal responses. Expressed algebraically:

$$MSE(\tau) = E\left\{\left[F(\tau)\right]\left[F(\tau)^{\bullet}\right]\right\} \qquad [12]$$

where

$F(\tau) = c(\tau) - \hat{c}(\tau)$ is the random error of a symbol in the $t^{th}$ sample; and

$$F(\tau)^{\bullet} = \left[c(\tau) - \hat{c}(\tau)\right]^{\bullet} \text{ is the complex conjugate of the error}$$

function.

As is also known, the correlation function is a measure of the mutual relationship of one function to another function. Correspondingly, the auto-correlation function describes the mutual relationship between two values of the same function, and can be expressed as:

$$R_{xx}(\tau) = E\left\{x(t+\tau)x(\tau)^{\bullet}\right\} \qquad [13]$$

where

$x(t)$ is a random function at time $t$; and

$x(t+\tau)$ is the value of the random function $x(t)$ at time $(t+\tau)$.

The correlation of the error function may now be expressed as:

$$R_{FF}(\tau) = E\left\{F(t+\tau)F(\tau)^*\right\}$$ [14]

Using a relationship between the auto-correlation of the of the noise component in a selected data block and the MSE for the channel response for the selected data block, and following the MSE minimization methodology, it was shown in the cross-referenced co-pending application, S/N 09/255,088, that the weight factors used to compensate for channel-induced distortion could be determined from:

$$\alpha = R_{cc}^{-1} R_i$$ [15]

where

$R_{cc}^{-1}$ is the inverse of the channel response auto-correlation matrix, $R_{cc}$, which was shown to be:

$$R_{cc} = \begin{bmatrix} R_{cc}(0)+R_{nn}(0) & R_{cc}(t_1-t_2) & \dots & R_{cc}(t_1-t_n) \\ R_{cc}(t_2-t_1) & R_{cc}(0)+R_{nn}(0) & \dots & R_{cc}(t_2-t_N) \\ \dots & \dots & \dots & \dots \\ R_{cc}(t_N-t_1) & R_{cc}(t_N-t_2) & \dots & R_{cc}(0)+R_{nn}(0) \end{bmatrix}$$

and $R_i$ was shown to be:

$$R_i = \begin{bmatrix} R_{cc}(t_1 - \tau) \\ R_{cc}(t_2 - \tau) \\ \\ R_{cc}(t_N - \tau) \end{bmatrix}$$

An exemplary application of the distortion-compensation method of the cross-referenced co-pending application, S/N 09/255,088 is hereafter described in connection with an estimation and compensation processor used in a typical wireless communication channel receiver as illustrated in Figure 4.

The weight estimation and compensation processor illustrated in Figure 4 is similar in operation to the processor depicted in Figure 2, which has already been described. However, for the case illustrated in Figure 4, the estimate of channel distortion is not limited to using only the pilot bits that may be contained in a data block to estimate the channel distortion at a specific time. Rather the estimate of channel distortion may also be made by determining, for example, an average value of all of the symbols or bits in the data blocks under consideration. Accordingly, the operation of functional block **534** depends upon the specific operation performed by functional block **512**. As was previously discussed, in regard to Figure 2, when function block **512** contains values of 4 pilot bits contained in each data block, then the operation of functional block **534** determines the average value of these 4 pilot bits. In the example, disclosed in regard to Figure 4, the contents of the data block (i.e., M bits) are used in function block **512** to estimate the channel distortion. However, the method is equally applicable to using only the pilot symbols when they are available.

The compensation weight factor coefficients for the N = 2 estimation and compensation processor illustrated may be determined from Equation 15 as:

$$\begin{bmatrix} \alpha_1 \\ \alpha_2 \end{bmatrix} = \frac{1}{det(R_{cc})} \begin{bmatrix} R_{cc}(0) + R_{nn}(0) & -R_{cc}(t_1 - t_2) \\ -R_{cc}(t_2 - t_1) & R_{cc}(0) + R_{nn}(0) \end{bmatrix} \begin{bmatrix} R_{cc}(t_1 - \tau) \\ R_{cc}(t_2 - \tau) \end{bmatrix}$$

and may be rewritten as:

$$\begin{bmatrix} \alpha_1 \\ \alpha_2 \end{bmatrix} = \frac{1}{det(R_{cc})} \begin{bmatrix} (R_{cc}(0) + R_{nn}(0))(R_{cc}(t_1 - \tau)) & (-R_{cc}(t_1 - t_2))(R_{cc}(t_2 - \tau)) \\ (-R_{cc}(t_2 - t_2))(R_{cc}(t_1 - \tau)) & (R_{cc}(0) + R_{nn}(0))(R_{cc}(t_2 - \tau)) \end{bmatrix} \quad [16]$$

Typically, and as known in the art, a wireless communication channel may be characterized as a Rayleigh fading channel or a Rician fading channel. These channel representations are used to mathematically determine the signal response characteristics of a communication channel. Assume now that the wireless channel is a Rayleigh fading channel, the auto-correlation characteristic of which is well known in the art as:

$$R_{cc}(\tau) = \sigma_{cc}^2 J_0(2\pi f_D \tau) \qquad [17]$$

where

$\sigma_{cc}^2$ is the power of the signal at $\tau = 0$, i.e., $R_{cc}(0)$;

$J_0(...)$ is Bessel Function of the first kind, of order zero;

$f_D$ is the Doppler frequency of the signal.

The two compensation weight factor coefficients of Figure 4 may now be determined by first computing the determinate of the channel-response cross-correlation matrix $R_{CC}$ as:

$$det(R_{cc}) = \left(R_{cc}(0) + R_{nn}(0)\right)^2 - R_{cc}^2(t_1 - t_2)$$

And using the relationships of Equations 16 and 17, the determinate of the matrix $R_{CC}$ is obtained as:

$$det(R_{cc}) = \left(\sigma_{cc}^2 + \sigma_{nn}^2\right)^2 - J_0^2(2\pi f_D T_B)$$

where

$R_{cc}(0) = \sigma_{cc}^2$ is the power of the actual channel;

$\sigma_{nn}^2$ is the power of the noise component,

wherein

$\dfrac{\sigma_{cc}^2}{\sigma_{nn}^2}$ is the Signal to Noise Ratio (SNR); and

$T_B$ is the time period of a single block (i.e., $t_1$-$t_2$)

From Equation 16, the weight factor coefficients may be determined as:

$$\alpha_1 = \frac{\left(1 + \sigma_{nn}^2\right) J_0^2(2\pi f_D(t_1 - \tau)) - J_0(2\pi f_D T_B) J_0(2\pi f_D(t_2 - \tau))}{\left(1 + \sigma_{nn}^2\right)^2 - J_0^2(2\pi f_D T_B)}$$

and

22

$$\alpha_2 = \frac{\left(1+\sigma_{nn}^2\right) J_0^2(2\pi f_D(t_2-\tau)) - J_0(2\pi f_D T_B) J_0(2\pi f_D(t_1-\tau))}{\left(1+\sigma_{nn}^2\right)^2 - J_0^2(2\pi f_D T_B)}$$

where $\sigma_{cc}^2$ is arbitrarily set equal to unity.

Referring again to Figure 4, complex averaging modules **534** are used to average the two channel-gain estimates associated with the M symbols of each block that are stored in delay line **512**. This averaging minimizes the error associated with the noise term. Complex multipliers **619** and **618** are used to multiply the outputs of averaging modules **534** by appropriate weighting factor coefficients $\alpha_1$ and $\alpha_2$, respectively. Weighting factor coefficients $\alpha_1$ and $\alpha_2$ are generated by processor **434** in accordance with the method of the invention expressed in Equation 47. The multiplier results are summed in complex adder **520**. Complex multiplier **424** then inverts the resultant sum. A baseband symbol sample, is generated by delay line **526** and the complex multiplier **430** multiples the output of inverter **424** with the delayed symbol sample to generate an estimate of an original data symbol.

As can be seen from the foregoing, a measure of Doppler frequency shift can be important to a determination of distortion compensation for a communications channel. Doppler frequency shift is also a factor in determining handoff arrangements for wireless mobile units, as well as in other mobile communications applications. A new methodology is disclosed and described herein for the estimation of Doppler frequency shift based on pilot signals received via a communications channel.

A received baseband signal $u(t)$ can be represented algebraically as:

$$u(t) = h(t)z(t) + n(t) \qquad\qquad [18]$$

where $z(t)$ is the transmitted signal, $n(t)$ represents random noise, and $h(t)$ represents complex fading coefficients for the channel, having amplitude and phase. Typically $h(t)$ is a zero-mean, wide-sense stationary complex random process. Often, $h(t)$ will be estimated from a specially transmitted signals -- so-called pilot signals – with $z(t)$ known *a priori*.

The relationship of such pilot signals to the information symbols transmitted in a block of data is illustrated in Figure 3, where one or more pilot signals are shown preceding the information symbols for each block of data, $T_B$. For purposes of the invention, the pilot signals may be user-dedicated pilot symbols, such as are used in WCDMA systems, as well as pilot channels such as used in IS-95 and CDMA 2000 systems. As will be apparent from the following discussion, the methodology of the invention provides an estimate of the Doppler frequency shift which is independent of the transmitted value or form of the pilot signals.

According to the method of the invention, an estimation of the Doppler frequency shift for the channel fading process, $h(t)$, is made based on second-order statistics of $h(t)$, in particular, the auto-correlation function. That auto-correlation function, $R_{hh}(\tau)$, can be defined as follows:

$$R_{hh}(\tau) = E\{ h(t + \tau) h(t)\} \qquad\qquad [19]$$

where $E\{\ \}$ denotes the expectation value. Although the methodology described herein is applicable to the general case for the auto-correlation function $R_{hh}(\tau)$, in an exemplary embodiment to be described hereafter, the well-accepted Clark's model, as applied for a Rayleigh fading channel, is used to describe the auto-correlation function of the channel fading process. For the Clark's model, the auto-correlation function can be described algebraically as:

$$R_{hh}(\tau) = J_0(2\pi f_m \tau) \cong 1 - 1/4(2\pi f_m \tau)^2 \qquad [20]$$

where $J_0(\ )$ is the zero-order Bessel function of the first kind, and $f_m$ is the maximum Doppler frequency to be estimated according to the methodology of the invention. The methodology is valid for small $f_m \tau$ and is believed to have wide utility.

With the methodology of the invention, the Doppler frequency shift can be estimated based solely on the received pilot signals. That methodology is implemented according to the following steps:

1. Estimate the auto-correlation function values $R_{hh}(\tau)$ at $\tau = t_1, t_2, ..., t_N$, using the pilot signals. This can be achieved through use of the received signals, $u(t)$, at symbol locations $t = t_1, t_2, ..., t_N$. Without loss of generality, it can be assumed that the transmitted signal, $z(t)$, is known to be at a "1" state. Therefore, $R_{hh}(\tau) = R_{uu}(\tau) - R_{nn}(\tau)$, where $R_{uu}(\tau)$ is the auto-correlation function for the received signal and $R_{nn}(\tau)$ is the auto-correlation function for the present noise.

2. Using the relationships of step 1 and the Clark's model for the auto-correlation function, simple algebraic manipulation gives the Doppler frequency estimator:

$$f_m = \frac{1}{\pi} \sqrt{\frac{R_{hh}(t_2) - R_{hh}(t_1)}{(t_1 + t_2)(t_1 - t_2)}} = \frac{1}{\pi} \sqrt{\frac{R_{uu}(t_2) - R_{uu}(t_1)}{(t_1 + t_2)(t_1 - t_2)}} \qquad [21]$$

where $R_{uu}(\tau)$ will be available directly from the received signals in a typical CDMA or TDMA system, $t_1$ and $t_2$ are any two symbol locations, and it being understood that the average noise power at $t_1$ is equal to the average noise power at $t_2$ -- therefore the noise factor auto-correlation terms for locations $t_1$ and $t_2$ are equal.

A flow diagram for the methodology of the invention is depicted in Figure 5. Considering the figure, the method begins with receipt, at a receiver, of an input signal from the channel, in step 500. From that the received input signal, pilot signals are extracted for a first symbol location in step 510, and for a second symbol location in step 520. Using the pilot signals extracted in steps 510 and 520, received signal cross-correlations, $R_{uu}(\tau)$, are determined for the first symbol location, in step 530, and for the second symbol location, in step 540. These received signal cross correlations are then used, along with the temporal values of the first and second symbol locations, to compute the estimated Doppler frequency shift, in step 550. As indicated in the figure, the computation of the estimated Doppler frequency shift is carried out in accordance with Equation 21 above.

As will be apparent, the estimated Doppler frequency shift is robust in the presence of noise since the estimator in Equation [21] is independent of the present noise power. It is also to be noted that the estimator works for non-Gaussian noise n(t), as well.

Since $R_{hh}(\tau) = R_{uu}(\tau) - R_{nn}(\tau)$ (assuming $h(t)$ and $n(t)$ are uncorrelated), $R_{hh}(t_2) - R_{hh}(t_1) = R_{uu}(t_2) - R_{uu}(t_1)$ irrespective of the type of noise or the presence of noise.

The estimator in Equation [21] is provided as an illustrative embodiment for a Doppler frequency estimator based only on received pilot signals, and in particular, their second-order statistics. In environments where the Clark's model breaks down, a different form of the auto-correlation function values would, of course, be utilized, but the derivation of a corresponding Doppler frequency estimator will be apparent to those skilled in the art from the described methodology for the Clark's model. The invention is intended to encompass all forms of a Doppler frequency shift estimators using such second-order statistics of the channel process.

A novel approach has been described for estimation of Doppler frequency shift using only information provided by received pilot signals, particularly the second-order statistics of the channel fading process. The method of the invention should not be construed to be limited solely to the illustrative embodiments. Further the method of the invention should not be construed to be limited solely to Rayleigh or Rician channels. Rather the method of the invention may be adapted to any wireless communication system.

Although the methodology of the invention, and illustrative applications of that methodology, have been described in detail, it should be understood that various changes, alterations, and substitutions may be made therein without departing from the spirit and scope of the invention as defined by the appended claims.

1. In a wireless communication system, a method for determining a Doppler frequency shift induced in a signal between two stations comprising the steps of;

selecting a model for specifying a fading process for a channel in said communications system;

determining at least one statistical parameter of said channel fading process based on a signal received from said channel, said statistical parameter having a Doppler frequency component; and

estimating said Doppler frequency shift as a function of said determined statistical parameter.

2. The method as recited in Claim 1 wherein said statistical parameter is an auto-correlation function of said channel fading process.

3. The method as recited in Claim 2 wherein said auto-correlation function is determined as:

$$R_{hh}(\tau) = J_0(2\pi f_m \tau)$$

where $J_0(\ )$ is the zero-order Bessel function of the first kind, and $f_m$ is the maximum Doppler frequency to be estimated.

4.      The method as recited in Claim 2 wherein said auto-correlation function is estimated as:

$$R_{hh}(\tau) = 1 - \frac{1}{4}(2\pi f_m \tau)^2$$

where $f_m$ is a maximum Doppler frequency to be estimated.

5.      The method as recited in Claim 1 wherein said function of said determined statistical parameter for estimating said Doppler frequency shift is specified as

$$f_m = \frac{1}{\pi}\sqrt{\frac{R_{uu}(t_2) - R_{uu}(t_1)}{(t_1 + t_2)(t_1 - t_2)}}$$

where $f_m$ is the estimated Doppler frequency, $R_{uu}(\tau)$ is an auto-correlation function for a received signal and $t_1$ and $t_2$ are any two symbol locations for the received signal.

6.      The method as recited in Claim 5 wherein said received signal auto-correlation function is determined in relation to a received signal at a first symbol location and a received signal at a second symbol location.

7.      The method as recited in Claim 6 wherein said received signal at said first symbol location and said received signal at said second symbol location are determined in reference to transmitted signals having known values.

8.      The method as recited in Claim 1 wherein said channel fading response model is based on a Rayleigh channel.

9.　　The method as recited in Claim 1 wherein said channel fading response model is based on a Rician channel.

*FIG. 1*

PRIOR ART

<u>10</u>

POWER    MEASURED SIR 19 (JAGGED LINE)    TARGET SIR 12 (DASHED LINE)

OUTER LOOP 17

FRAME 16

TIME

TARGET SIR 12

MEASURED
SIR 19

INNER LOOP 16

FRAME 16

*FIG. 2*

<u>20</u>

| SPEED/kmh | STEP SIZE IN NORMAL MODE/dB |
|-----------|------------------------------|
| 3 | 0.5 |
| 10 | 1 |
| 20 | 1.5 |
| 40 | 2 |
| 60 | 2 |
| 100 | 0.25 |
| 300 | 0.25 |

THE STEP SIZES WHICH GIVES OPTIMAL PERFORMANCE IN TERMS OF BOTHER $E_b/N_o$ AND SIR VARIANCE [1]. PEDESTRIAN A CHANNEL.

## FIG. 3

<u>30</u>

| # MULTI-PATHS<br>SPEED | 1 | 2 | 3 | 4 | 5 |
|---|---|---|---|---|---|
| 3 | $x_{11}$ | $x_{12}$ | $x_{13}$ | $x_{14}$ | $x_{15}$ |
| 10 | $x_{21}$ | $x_{22}$ | $x_{23}$ | $x_{24}$ | $x_{25}$ |
| 20 | $x_{31}$ | $x_{32}$ | $x_{33}$ | $x_{34}$ | $x_{35}$ |
| 40 | $x_{41}$ | $x_{42}$ | $x_{43}$ | $x_{44}$ | $x_{45}$ |
| 60 | $x_{51}$ | $x_{52}$ | $x_{53}$ | $x_{54}$ | $x_{55}$ |
| 100 | $x_{61}$ | $x_{62}$ | $x_{63}$ | $x_{64}$ | $x_{65}$ |
| 300 | $x_{71}$ | $x_{72}$ | $x_{73}$ | $x_{74}$ | $x_{75}$ |

$x_{ij}$ = OPTIMUM TRANSMIT STEP SIZE FOR SPEED i AND
j NUMBER OF MULTI-PATHS

## FIG. 4

| SPEED/km/h | STEP SIZE<br>0.25 | STEP SIZE<br>0.5 | STEP SIZE<br>1 | STEP SIZE<br>1.5 | STEP SIZE<br>2 | STEP SIZE<br>3 | STEP SIZE<br>4 |
|---|---|---|---|---|---|---|---|
| 3 | 5.0 | 4.8 | 4.9 | 5.3 | 5.6 | 6.5 | 7.4 |
| 10 | 7.0 | 5.8 | 5.4 | 5.5 | 5.8 | 6.6 | 7.5 |
| 20 | 9.9 | 7.5 | 6.5 | 6.2 | 6.3 | 7.0 | 7.8 |
| 40 | 10.1 | 8.8 | 8.1 | 7.8 | 7.7 | 8.0 | 8.8 |
| 60 | 9.5 | 9.4 | 9.1 | 8.9 | 8.8 | 9.1 | 9.8 |
| 100 | 9.4 | 9.6 | 9.7 | 10.0 | 10.2 | 10.7 | 11.5 |
| 300 | 9.5 | 9.7 | 10.2 | 10.6 | 11.0 | 12.0 | 13.2 |

RECEIVED $E_h/N_o$ REQUIRED FOR BER = 0.01 AT DIFFERENT STEP SIZES FOR DIFFERENT SPEEDS

## FIG. 5

500

```
┌─────────────────────────────────────┐
│     ESTIMATE CHANNEL CONDITION       │─ 510
└─────────────────────────────────────┘
                  │
                  ▼
┌─────────────────────────────────────┐
│ DETERMINE OPTIMUM TRANSMIT STEP SIZE │
│ AND TARGET CONTROL THRESHOLD BASED   │─ 520
│    ESTIMATED CHANNEL CONDITION       │
└─────────────────────────────────────┘
                  │
                  ▼
┌─────────────────────────────────────┐
│       MEASURE TARGET CONTROL         │─ 530
└─────────────────────────────────────┘
                  │
                  ▼
            ╱ IS        ╲
          ╱  MEASURED TARGET ╲      ─ 540
        ╱ CONTROL GREATER THAN TARGET ╲
          ╲  CONTROL THRESHOLD  ╱
            ╲      ?      ╱
                  │
                  ▼
┌─────────────────────────────────────┐
│   TRANSMIT POWER CONTROL MESSAGE     │─ 550
└─────────────────────────────────────┘
```

## FIG. 6

| SPEED | STEP SIZE | SIR |
|-------|-----------|-----|
| 3     | 0.5       | 4.8 |
| 10    | 1         | 5.4 |
| 20    | 1.5       | 6.2 |
| 40    | 2         | 7.7 |
| 60    | 2         | 8.8 |
| 100   | 0.25      | 9.4 |
| 300   | 0.25      | 9.5 |

## ABSTRACT

A method is provided for determining the Doppler frequency shift that occurs in the reception of a communication signal when the relative velocity between the transmitted and receiver is unknown. By estimating the channel characteristics and measuring the channel response to known transmitted data bits, a measure of the Doppler frequency is determined according to the method of the invention. In particular, a good estimate of the Doppler frequency shift is obtained based on a second order statistic of the fading process for the channel response to the known transmitted data bits. The approach is simple and general. It applies for any system such as WCDMA and CDMA 2000 when Doppler frequency is needed.

**Claims**

1. A method of power control comprising the steps of:

   estimating a channel condition; and
   determining an optimum transmit step size based on the estimated channel condition.

2. The method of claim 1, wherein the optimum transmit step size corresponds to a desired quality of service.

3. The method of claim 1 comprising the additional step of:
   transmitting from a receiving entity a power control message indicating to a transmitting entity to increase transmission power by the optimum transmit step size if a measured target control is below a target control threshold.

4. The method of claim 1 comprising the additional step of:
   transmitting from a receiving entity a power control message indicating to a transmitting entity to decrease transmission power by the optimum transmit step size if a measured target control is not below a target control threshold.

5. The method of claim 1 comprising the additional step of:
   determining a target control threshold based on the optimum transmit step size.

6. The method of claim 5 comprising the additional steps of:

   measuring a target control at a receiving entity; and
   transmitting from the receiving entity a power control message indicating to a transmitting entity whether to increase or decrease transmission power by the optimum transmit step size based on the measured target control and the target control threshold.

**7.** The method of claim 6, wherein the target control being measured is signal-to-interference ratio.

**8.** The method of claim 6, wherein the target control threshold corresponds to a desired quality of service.

**9.** The method of claim 8, wherein the quality of service parameter is frame error rate.

**10.** The method of claim 8, wherein the quality of service parameter is symbol error rate.

**11.** The method of claim 8, wherein the quality of service parameter is bit error rate

**12.** The method of claim 1, wherein the channel condition being estimated is mobile-station velocity.

**13.** The method of claim 1, wherein the channel condition being estimated is Doppler spread.

**14.** The method of claim 1, wherein the channel condition being estimated is K-factor.

**15.** The method of claim 1, wherein the channel condition being estimated is number of multi-paths.

**16.** The method of claim 1, wherein the channel condition being estimated is signal strengths corresponding to a plurality of multi-paths.

**17.** The method of claim 1, wherein the channel condition being estimated is a mean of a measured target control.

**18.** The method of claim 1, wherein the channel condition being estimated is a variance of a measured target control.

**19.** The method of claim 1, wherein the channel condition being estimated is a correlation time of a measured target control.

## FIG. 1
PRIOR ART
<u>10</u>

POWER    MEASURED SIR 19 (JAGGED LINE)    TARGET SIR 12 (DASHED LINE)

OUTER LOOP 17

FRAME 16

TIME

MEASURED SIR 19    TARGET SIR 12

INNER LOOP 16

FRAME 16

## FIG. 2
<u>20</u>

| SPEED/kmh | STEP SIZE IN NORMAL MODE/dB |
|-----------|------------------------------|
| 3 | 0.5 |
| 10 | 1 |
| 20 | 1.5 |
| 40 | 2 |
| 60 | 2 |
| 100 | 0.25 |
| 300 | 0.25 |

THE STEP SIZES WHICH GIVES OPTIMAL PERFORMANCE IN TERMS OF BOTHER $E_b/N_o$ AND SIR VARIANCE [1]. PEDESTRIAN A CHANNEL.

## FIG. 3

<u>30</u>

| SPEED \ # MULTI-PATHS | 1 | 2 | 3 | 4 | 5 |
|---|---|---|---|---|---|
| 3 | $x_{11}$ | $x_{12}$ | $x_{13}$ | $x_{14}$ | $x_{15}$ |
| 10 | $x_{21}$ | $x_{22}$ | $x_{23}$ | $x_{24}$ | $x_{25}$ |
| 20 | $x_{31}$ | $x_{32}$ | $x_{33}$ | $x_{34}$ | $x_{35}$ |
| 40 | $x_{41}$ | $x_{42}$ | $x_{43}$ | $x_{44}$ | $x_{45}$ |
| 60 | $x_{51}$ | $x_{52}$ | $x_{53}$ | $x_{54}$ | $x_{55}$ |
| 100 | $x_{61}$ | $x_{62}$ | $x_{63}$ | $x_{64}$ | $x_{65}$ |
| 300 | $x_{71}$ | $x_{72}$ | $x_{73}$ | $x_{74}$ | $x_{75}$ |

$x_{ij}$ = OPTIMUM TRANSMIT STEP SIZE FOR SPEED i AND
j NUMBER OF MULTI-PATHS

## FIG. 4

| SPEED/km/h | STEP SIZE 0.25 | STEP SIZE 0.5 | STEP SIZE 1 | STEP SIZE 1.5 | STEP SIZE 2 | STEP SIZE 3 | STEP SIZE 4 |
|---|---|---|---|---|---|---|---|
| 3 | 5.0 | 4.8 | 4.9 | 5.3 | 5.6 | 6.5 | 7.4 |
| 10 | 7.0 | 5.8 | 5.4 | 5.5 | 5.8 | 6.6 | 7.5 |
| 20 | 9.9 | 7.5 | 6.5 | 6.2 | 6.3 | 7.0 | 7.8 |
| 40 | 10.1 | 8.8 | 8.1 | 7.8 | 7.7 | 8.0 | 8.8 |
| 60 | 9.5 | 9.4 | 9.1 | 8.9 | 8.8 | 9.1 | 9.8 |
| 100 | 9.4 | 9.6 | 9.7 | 10.0 | 10.2 | 10.7 | 11.5 |
| 300 | 9.5 | 9.7 | 10.2 | 10.6 | 11.0 | 12.0 | 13.2 |

RECEIVED $E_h/N_o$ REQUIRED FOR BER = 0.01 AT DIFFERENT STEP SIZES FOR DIFFERENT SPEEDS

## FIG. 5

### 500

```
┌─────────────────────────────────────┐
│      ESTIMATE CHANNEL CONDITION      │──── 510
└─────────────────────────────────────┘
                   │
                   ▼
┌─────────────────────────────────────┐
│  DETERMINE OPTIMUM TRANSMIT STEP SIZE │
│  AND TARGET CONTROL THRESHOLD BASED   │──── 520
│     ESTIMATED CHANNEL CONDITION       │
└─────────────────────────────────────┘
                   │
                   ▼
┌─────────────────────────────────────┐
│        MEASURE TARGET CONTROL        │──── 530
└─────────────────────────────────────┘
                   │
                   ▼
               ◇ IS ◇
           MEASURED TARGET              ─── 540
       CONTROL GREATER THAN TARGET
           CONTROL THRESHOLD
                  ?
                   │
                   ▼
┌─────────────────────────────────────┐
│     TRANSMIT POWER CONTROL MESSAGE    │──── 550
└─────────────────────────────────────┘
```

## FIG. 6

| SPEED | STEP SIZE | SIR |
|-------|-----------|-----|
| 3 | 0.5 | 4.8 |
| 10 | 1 | 5.4 |
| 20 | .1.5 | 6.2 |
| 40 | 2 | 7.7 |
| 60 | 2 | 8.8 |
| 100 | 0.25 | 9.4 |
| 300 | 0.25 | 9.5 |

**European Patent Office**

## EUROPEAN SEARCH REPORT

Application Number

EP 01 30 1721

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 22757 A (LANDENBERGER HOLGER ;OBERMANNS SEBASTIAN (DE); KOTTKAMP MEIK (DE);) 20 April 2000 (2000-04-20) * abstract * * page 2, line 18 - page 3, line 32 * * page 5, line 27 - page 6, line 12 * * page 7, line 5 - line 10 * * page 9, line 8 - page 10, line 3; figure 4 * | 1,3,4, 12-19 | H04B7/005 |
| X<br>Y | WO 00 33478 A (QUALCOMM INC) 8 June 2000 (2000-06-08) <br>* abstract * * page 3, line 15 - page 4, line 5 * * page 4, line 14 - line 31 * * page 5, line 22 - page 10, line 18; figure 1; tables I,II * | 1,3-7, 12,18<br>8-11 | |
| Y<br><br>A | EP 0 853 393 A (NIPPON TELEGRAPH & TELEPHONE) 15 July 1998 (1998-07-15) <br><br>* abstract * * column 2, line 32 - last line; figure 1 * * claims 1,2,5; figures 2-4 * | 8-11<br><br>1-7,12, 13,15,16 | TECHNICAL FIELDS SEARCHED (Int.Cl.7)<br>H04B |
| X | WO 96 31014 A (QUALCOMM INC) 3 October 1996 (1996-10-03) * abstract * * page 5, line 18 - line 22 * * page 12, line 5 - line 26; figures 2,3 * * claims 1,5,6 * | 1-4,12, 13 | |
| P,X | WO 00 74261 A (KONINKL PHILIPS ELECTRONICS NV) 7 December 2000 (2000-12-07) * page 2, line 7 - line 30 * | 1,3-7,13 | |

-/--

The present search report has been drawn up for all claims

| Place of search | Date of completion of the search | Examiner |
|---|---|---|
| THE HAGUE | 17 December 2001 | Sieben, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 180 854 A1

| | European Patent Office | **EUROPEAN SEARCH REPORT** | Application Number EP 01 30 1721 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 709 973 A (NIPPON TELEGRAPH & TELEPHONE) 1 May 1996 (1996-05-01) * column 1, line 32 - column 2, line 31; figures 1-3 * * column 8, line 57 - column 9, line 9; figures 5,7 * * column 11, line 14 - line 29; figures 4,13 * * column 12, line 1 - line 20; figure 16 * | 1,5-19 | |

TECHNICAL FIELDS SEARCHED (Int.Cl.7)

The present search report has been drawn up for all claims

| Place of search | Date of completion of the search | Examiner |
|---|---|---|
| THE HAGUE | 17 December 2001 | Sieben, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

40

## ANNEX TO THE EUROPEAN SEARCH REPORT
## ON EUROPEAN PATENT APPLICATION NO.

EP 01 30 1721

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-2001

| Patent document cited in search report | | Publication date | Patent family member(s) | | Publication date |
|---|---|---|---|---|---|
| WO 0022757 | A | 20-04-2000 | AU | 1374200 A | 01-05-2000 |
| | | | BR | 9914395 A | 26-06-2001 |
| | | | CN | 1324527 T | 28-11-2001 |
| | | | WO | 0022757 A2 | 20-04-2000 |
| | | | EP | 1119925 A2 | 01-08-2001 |
| WO 0033478 | A | 08-06-2000 | AU | 3106900 A | 19-06-2000 |
| | | | EP | 1135870 A1 | 26-09-2001 |
| | | | WO | 0033478 A1 | 08-06-2000 |
| EP 0853393 | A | 15-07-1998 | EP | 0853393 A1 | 15-07-1998 |
| | | | CA | 2230778 A1 | 31-12-1997 |
| | | | CN | 1198274 A | 04-11-1998 |
| | | | WO | 9750197 A1 | 31-12-1997 |
| WO 9631014 | A | 03-10-1996 | AU | 710025 B2 | 09-09-1999 |
| | | | AU | 5378296 A | 16-10-1996 |
| | | | BR | 9607976 A | 13-01-1998 |
| | | | CA | 2216729 A1 | 03-10-1996 |
| | | | EP | 0818084 A1 | 14-01-1998 |
| | | | IL | 117687 A | 28-01-2001 |
| | | | JP | 3065666 B2 | 17-07-2000 |
| | | | JP | 11502991 T | 09-03-1999 |
| | | | WO | 9631014 A1 | 03-10-1996 |
| | | | US | 6317587 B1 | 13-11-2001 |
| | | | US | 6137840 A | 24-10-2000 |
| | | | US | 2001014589 A1 | 16-08-2001 |
| | | | US | 6035209 A | 07-03-2000 |
| | | | ZA | 9602030 A | 16-07-1996 |
| WO 0074261 | A | 07-12-2000 | CN | 1316137 T | 03-10-2001 |
| | | | CN | 1318230 T | 17-10-2001 |
| | | | WO | 0074260 A1 | 07-12-2000 |
| | | | WO | 0074261 A1 | 07-12-2000 |
| | | | EP | 1101292 A1 | 23-05-2001 |
| | | | EP | 1101293 A1 | 23-05-2001 |
| EP 0709973 | A | 01-05-1996 | CN | 1123976 A ,B | 05-06-1996 |
| | | | CN | 1264991 A | 30-08-2000 |
| | | | EP | 1041732 A2 | 04-10-2000 |
| | | | EP | 1041733 A2 | 04-10-2000 |
| | | | EP | 0709973 A1 | 01-05-1996 |
| | | | JP | 3014308 B2 | 28-02-2000 |
| | | | JP | 8181653 A | 12-07-1996 |
| | | | US | 5873028 A | 16-02-1999 |

EPO FORM P0459

For more details about this annex : see Official Journal of the European Patent Office, No. 12/82